# EUROPEAN PATENT APPLICATION

(11) **EP 3 241 751 A1**
(43) Date of publication of application: **08.11.2017**
(21) Application number: 17167908.7
(22) Date of filing: 25.04.2017
(51) Int. Cl.: B64D 15/04, B64D 33/02, B64D 29/00, F02C 7/047

(54) **DIMPLED NACELLE INNER-SURFACE FOR HEAT TRANSFER IMPROVEMENT**

(30) Priority: 02.05.2016 US 201615143758
(71) Applicant: General Electric Company, Schenectady, NY 12345 (US)
(72) Inventor: TIWARI, Prashant, West Chester, OH Ohio 45069 (US)
(74) Representative: Williams, Andrew Richard

(57) **Abstract**

An apparatus 10 for improving heat transfer through a leading portion 10 of an aircraft engine. The apparatus includes a wall 16 that is defined by the leading portion 10. A surface 22 is defined by the wall 16 and the surface 22 defines a channel 30 through the leading portion 10 of the aircraft engine. The apparatus includes a nozzle 34 fluidly connected to the channel 30, to direct bleed air therein. Pits 42 are defined in the surface 22 of the channel 30 such that the bleed air can flow across the pits 42.

## Description

### BACKGROUND

The present invention relates to heating components of an aircraft engine and more particularly to heating the leading nacelle of an aircraft engine.

The accretion or buildup of ice on an aircraft engine is undesirable. In order to reduce ice buildup, it is known to introduce hot fluids from one part of an engine to the other components of the engine. One problem with these methods is that distributing thermal energy evenly throughout the part to be heated is difficult. As a result, either ice buildup happens on portions of the component that are not heated sufficiently or additional fluid flow from another part of the engine is needed to provide the required thermal load. Such an increase in fluid flow reduces efficiency of the engine. Accordingly, there is a need for an apparatus to more efficiently use fluid flow to heat an aircraft component.

### BRIEF DESCRIPTION

This need is addressed by a structure within the component to be heated that is configured to increase the heat transfer coefficient within the component.

According to one aspect of the present invention there is provided an apparatus for improving heat transfer through a leading portion of an aircraft engine. The apparatus includes a wall that is defined by the leading portion. A surface is defined by the wall and the surface defines a channel through the leading portion of the aircraft engine. A source for a heated fluid is fluidly connected to the channel. Pits are defined in the surface in the channel.

According to another aspect of the present invention there is provided a method for heating an aircraft engine nacelle. The method includes the steps of the method comprising the steps of: introducing a fluid into the aircraft engine nacelle; causing the fluid to flow across pits defined by the aircraft engine nacelle; and increasing the turbulence of the fluid as the fluid flows across the pits.

### BRIEF DESCRIPTION OF THE DRAWINGS

The invention may be best understood by reference to the following description taken in conjunction with the accompanying drawing figures in which:
FIG. 1 shows a partially cutaway view of an aircraft engine having a nacelle that defines a D-duct;
FIG. 2 shows a circular representation of an internal portion of the engine shown in FIG. 1 that depicts the interior wall surfaces that define the D-duct;
FIG. 3 shows a section of the interior wall surfaces that define the D-duct;
FIG. 4 shows a section view of a D-duct having dimples formed therein;
FIG. 5 shows a section of a D-duct wall interior surface having dimples defined thereon; and
FIG. 6 shows a directional flow nozzle.

### DETAILED DESCRIPTION

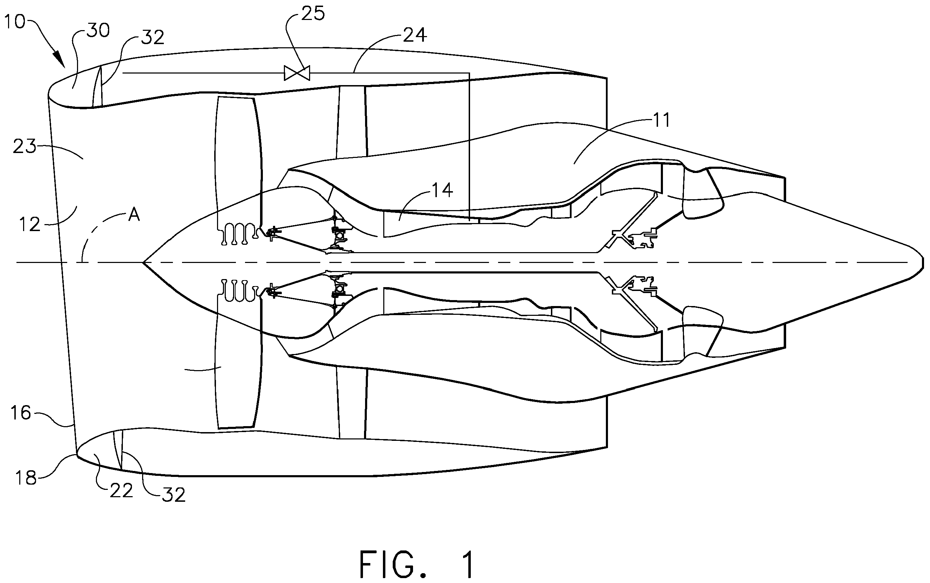

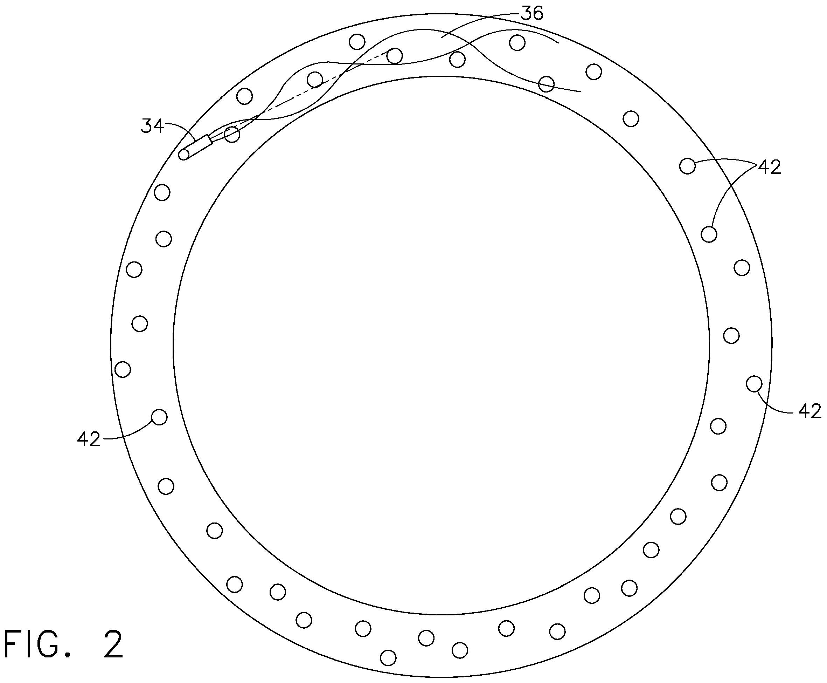

Referring to the drawings wherein identical reference numerals denote the same elements throughout the various views, FIG. 1 shows a partially cutaway view of a nacelle 10 that defines the leading portion of an engine 11. The nacelle 10 has a D-duct 30 defined therein that is configured with a plurality of dimples 42 as shown in FIG. 2. The dimples 42 are configured to increase the turbulence of fluid within the D-duct 30 and thus improve heat transfer from the fluid into and through the nacelle 10.

The nacelle 10 of the engine 11 has a wall 16 that has an inner surface 22 and an outer surface 23. The outer surface 23 of the wall 16 defines an inner lip 12 and an outer lip 18. The inner surface 22 defines the D-duct 30 in conjunction with a D-duct-floor 32.

The D-duct 30 is an annular chamber defined by the inner surface 22 of the wall 16 that is positioned around an axis A of the engine 11. As shown, the D-duct 30 has a D-shaped cross-section. As shown in FIG. 2, a directional flow nozzle 34 extends into the D-duct 30. The directional flow nozzle 34 is fluidly connected to a source of heated fluid from the engine 11 (e.g. a compressor 14) via a conduit 24 by way of example and not limitation, the heated fluid can be one of the following: a gas, air, liquids, and a combination thereof. A valve 25 is positioned in conduit 24 between the engine 11 and the directional flow nozzle 34. The valve 25 is configured to control the flow through the conduit 24 to the directional flow nozzle 34.

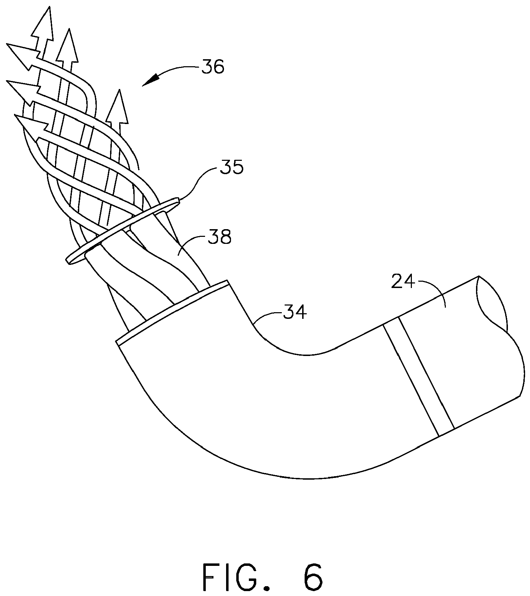

Referring now to FIG. 6, the nozzle 34 is configured to impart a rotational flow as the heated fluid, or bleed air, moves inside the nozzle 34. In one embodiment the nozzle 34 contains a plurality of fluid flow passages 38 twisted in a helical pattern. In the preferred embodiment four to six fluid flow passages 38 are used, however in other embodiments the number of passages could be substantially more or less. Additionally other means may be used to cause the rotation including but not limited to internal vanes or nozzles. As the hot fluid moves inside the nozzle 34 the fluid flow passages 38 impart a rotational movement to the gas and then eject it out of the discharge and 35 into the D-duct 30. It will be recognized that the injection of the hot fluid stream into the housing air will cause the entrained mass of air to rotate within the D-duct 30 in a swirling rotational direction. A suitable exhaust means, such as suitably sized holes formed in an outboard position of the nose lip D-duct 30, permit a portion of such entrained air to escape the D-duct 30 equal to the mass flow rate of hot fluid being injected into the D-duct 30 to maintain an equilibrium of flow.

It should be appreciated that the nacelle 10 and the D-duct 30 can be shapes other than circular such as, but not limited to, elliptical. It should also be appreciated that the cross-section of the D-duct 30 can be similar to that of the nacelle 10 but it can also be different.

As can be seen in FIG. 2, the bleed air introduced from the directional flow nozzle 34 is directed around the D-duct 30. The directional flow nozzle 34 includes a discharge end 35. In the illustrated embodiment, the bleed air is introduced in a swirling pattern that defines a swirl zone 36 that extends from the discharge end 35. It should be appreciated that the bleed air introduced into the D-duct 30 can exhibit a flow pattern other than swirling. Such other flow patterns can be defined by the dimensions of the directional flow nozzle 34.

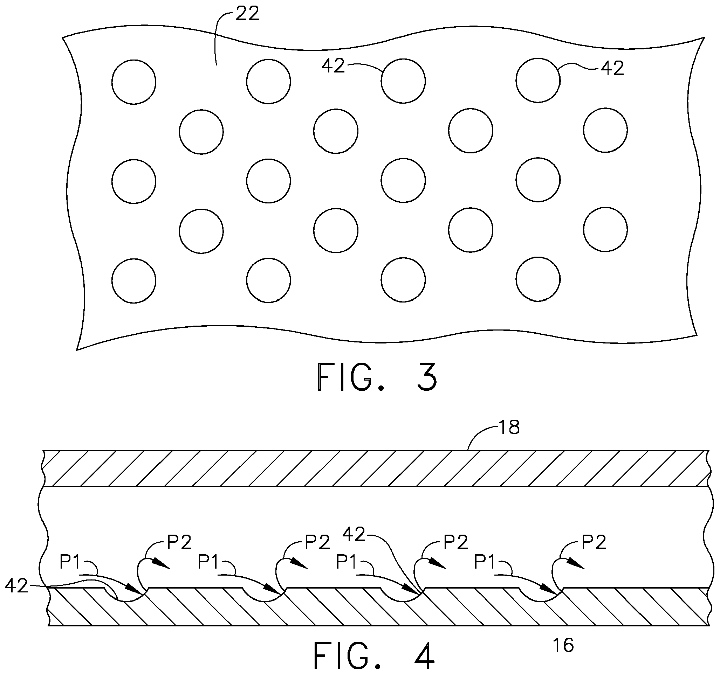

As can be seen in FIG. 2 and FIG. 3, a plurality of dimples 42 are defined by the inner surface 22 of the wall 16 and by floor 32. The dimples 42 are pits that extend into the wall 16 from the inner surface 22 toward the outer surface 23 of the wall 16 and into the floor 32. Each of the dimples 42 as shown in FIG. 2, FIG. 3, and FIG. 5 have a generally circular profile when viewed in a plan view. The dimples 42 are generally semi-spherical pits. The geometric shape of the dimples 42 can be some shape other than that of semi-spherical. It should also be appreciated that individual dimples 42 within the plurality of the dimples 42 can be different geometrical shapes.

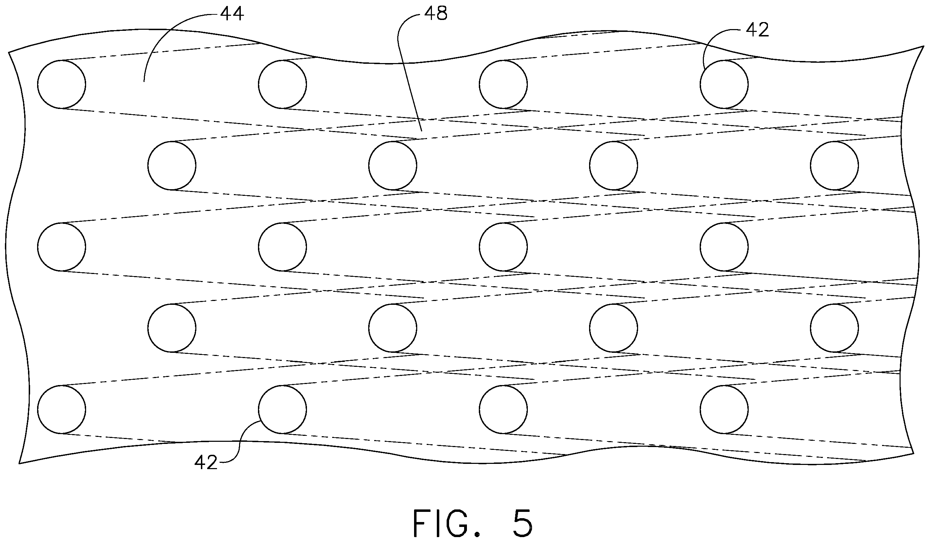

Referring now to FIG. 4 and FIG. 5, when the moving bleed air from the directional flow nozzle 34 strikes one of the dimples 42, turbulence is introduced into the airstream. Upon entering one of the dimples 42, the bleed air can have a path P1 as shown in FIG. 4. It is believed that upon the gas flow exiting the dimple 42 path P1 is converted to hypothetical path P2 by the interaction of the gas flow with the shape of the dimple 42. The path P2 is curved to indicate turbulence introduced into the bleed air by the dimple 42.

It is believed that interaction of the bleed air with a dimple 42 causes a plurality of vortices to be shed that extend away from the dimple 42. The plurality of vortices defines a spreading turbulent shadow 44 as indicated in FIG. 5. When one or more turbulent shadows 44 intersect, they define intersection regions 48. It is believed that turbulence within the intersection regions 48 is further increased relative to the amount of turbulence in one of the turbulent shadows 44.

The nacelle 10 can be better understood by description of the operation thereof. Bleed air is introduced into the D-duct 30 by the directional flow nozzle 34. The introduced bleed air defines a flow path. At least a portion of the flow path intersects the plurality of dimples 42. Each of the dimples 42 interacts with the flow path to introduce more turbulence. The increase in turbulence causes an increase in the heat transfer coefficient from the bleed air within the D-duct 30 through the wall 16 to the inner lip 12 and the outer lip 18 of the nacelle 30.

The present invention has advantages over the prior art. The dimples provided as described above are configured to increase the transfer of heat from within the D-duct of the nacelle through the nacelle wall. The resulting improved thermal energy distribution on the outer surface of the nacelle increases effectiveness in keeping the nacelle inner lip ice-free while mitigating hot spots on the outer lip region. Thus the nacelle inner lip is kept ice-free with less use of expensive bleed air flow. As a result the dimples of the present invention improve the overall efficiency of the engine to make it more competitive in the marketplace.

The foregoing has described an apparatus configured to provide an improved heat transfer coefficient within the nacelle D-duct of an aircraft engine and all features described herein of this invention (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying potential points of novelty, abstract and drawings), or to any novel one, or any novel combination, of the steps of any method or process so disclosed.

Various aspects and embodiments of the present invention are defined by the following numbered clauses:
1. An apparatus for improving heat transfer through a leading portion of an aircraft engine, the apparatus comprising:
   a wall that is defined by the leading portion;
   a surface defined by the wall;
   a channel defined by the surface;
   a source for a fluid that is fluidly connected to the channel; and
   a pit defined by the surface.
2. The apparatus according to clause 1, further comprising:
   a plurality of pits.
3. The apparatus according to any preceding clause, wherein each of the pits are configured to cause turbulence to crossing fluid flow.
4. The apparatus according to any preceding clause, wherein each of the pits is configured to define a turbulent shadow.
5. The apparatus according to any preceding clause, wherein the plurality of pits is arranged such that turbulent shadows from at least two different pits intersect to define a intersection region.
6. The apparatus according to any preceding clause, wherein the plurality of pits define various geometric shapes.
7. The apparatus according to any preceding clause, wherein at least some of the plurality of pits are semi-spherical.
8. The apparatus according to any preceding clause, wherein all of the plurality of pits are semi-spherical.
9. An aircraft engine nacelle configured to provide improved heat transfer from fluid within the nacelle through a wall of the nacelle, the nacelle comprising:
   a D-duct defined by the wall;
   a source of bleed air fluidly connected to the D-duct; and
   a plurality of pits defined on a surface of the D-duct.
10. The aircraft engine nacelle according to any preceding clause, wherein each of the pits are configured to cause turbulence to crossing bleed air.
11. The aircraft engine nacelle according to any preceding clause, wherein each of the pits is configured to define a turbulent shadow.
12. The aircraft engine nacelle according to any preceding clause, wherein the plurality of pits is arranged such that turbulent shadows from at least two different pits intersect to define an intersection region.
13. The aircraft engine nacelle according to any preceding clause, wherein the plurality of pits define various geometric shapes.
14. The aircraft engine nacelle according to any preceding clause, wherein at least some of the plurality of pits are semi-spherical.
15. The aircraft engine nacelle according to any preceding clause, wherein all of the plurality of pits are semi-spherical.
16. A method for heating an aircraft engine nacelle, the method comprising the steps of:
   introducing a fluid into the aircraft engine nacelle;
   causing the fluid to flow across pits defined by the aircraft engine nacelle; and
   increasing the turbulence of the fluid as the fluid flows across the pits.
17. The method of any preceding clause, further comprising the step of:
   creating turbulent shadows.
18. The method of any preceding clause, further comprising the step of: creating intersection regions that are more turbulent than the turbulent shadows.

## Claims

1. An apparatus for improving heat transfer through a leading portion (10) of an aircraft engine, the apparatus comprising:
a wall (16) that is defined by the leading portion (10);
a surface (22) defined by the wall (16);
a channel (24) defined by the surface (22);
a source for a fluid that is fluidly connected to the channel (24); and
a pit (42) defined by the surface (22).

2. The apparatus according to claim 1, further comprising:
a plurality of pits (42).

3. The apparatus according to claim 2, wherein each of the pits (42) are configured to cause turbulence to crossing fluid flow.

4. The apparatus according to claim 3, wherein each of the pits (42) is configured to define a turbulent shadow (44).

5. The apparatus according to claim 4, wherein the pits (42) are arranged such that turbulent shadow (44) from at least two different pits (42) intersect to define an intersection region (48).

6. The apparatus according to any of claims 2 to 5, wherein the pits (42) define various geometric shapes.

7. The apparatus according to claim 6, wherein at least some of the pits (42) are semi-spherical.

8. The apparatus according to claim 7, wherein all of the pits (42) are semi-spherical.

9. An aircraft engine nacelle (10) configured to provide improved heat transfer from fluid within the nacelle (10) through a wall (16) of the nacelle (10), the nacelle (10) comprising:
a D-duct 30 defined by the wall (16);
a source of bleed air fluidly connected to the D-duct (30); and
a plurality of pits (42) defined on a surface (22) of the D-duct (30).

10. The aircraft engine nacelle (10) according to claim 9, wherein each of the pits (42) are configured to cause turbulence to crossing bleed air.

11. The aircraft engine nacelle (10) according to claim 10, wherein each of the pits (42) is configured to define a turbulent shadow (44).

12. The aircraft engine nacelle (10) according to claim 11, wherein the pits (42) are arranged such that turbulent shadow (44) from at least two different pits (42) intersect to define an intersection region.

13. The aircraft engine nacelle (10) according to any of claims 9 to 12, wherein the pits (42) define various geometric shapes.

14. The aircraft engine nacelle (10) according to claim 13, wherein at least some of the pits (42) are semi-spherical.

15. A method for heating an aircraft engine nacelle 10, the method comprising the steps of:
introducing a fluid into the aircraft engine nacelle (10);
causing the fluid to flow across the pits (42) defined by the aircraft engine nacelle (10); and
increasing the turbulence of the fluid as the fluid flows across the pits (42).
